# FASCICULE DE BREVET EUROPEEN

(11) **EP 3 005 296 B1**
(45) Date de publication et mention de la délivrance du brevet: **05.08.2020**
(21) Numéro de dépôt: 14737161.1
(22) Date de dépôt: 06.06.2014
(51) Int. Cl.: H04N 5/265, H04N 5/232

(54) **FUSION DE PLUSIEURS FLUX VIDÉO**
ZUSAMMENFÜGEN VON MEHREREN VIDEOSTRÖMEN
MERGING OF A PLURALITY OF VIDEO FLOWS

(30) Priorité: 07.06.2013 FR 1355282
(43) Date de publication de la demande: 13.04.2016
(73) Titulaire: GoPro, Inc., San Mateo CA 94402 (US)
(72) Inventeur: JENNY, Alexandre, F-73190 Challes-les-Eaux (FR); COUDRAY, Renan, F-73800 Montmélian (FR)
(74) Mandataire: Novaimo
(86) Numéro de dépôt international: PCT/EP2014/061897
(87) Numéro de publication internationale: WO 2014/195492

(56) Documents cités:
- US-A1- 2009 262 206
- US-B1- 6 788 333
- MAI ZHENG ET AL: "Stitching Video from Webcams", 1 décembre 2008 (2008-12-01), ADVANCES IN VISUAL COMPUTING: 4TH INTERNATIONAL SYMPOSIUM, ISVC 2008, LAS VEGAS, NV, USA, DECEMBER 1-3, 2008. PROCEEDINGS, PART II, SPRINGER BERLIN HEIDELBERG, BERLIN, HEIDELBERG, PAGE(S) 420 - 429, XP019112243, ISBN: 978-3-540-89645-6 le document en entier
- Ryan Jackson: "Shooting 360-degree video with four GoPro HD Hero cameras | Ryan Jackson Photography", , 8 février 2011 (2011-02-08), XP055099926, Extrait de l'Internet: URL:http://punkoryan.com/2011/02/08/shooti ng-360-degree-video-with-four-gopro-hd-her o-cameras [extrait le 2014-02-03]

## Description

L'invention concerne un procédé de génération d'un fichier de données de type vidéo par fusion de plusieurs fichiers de données video (revendication 1). Elle concerne aussi un interface homme machine utilisée dans la mise en œuvre de ce procédé. Elle concerne aussi un dispositif (revendication 15) et un système de fusion de fichiers vidéo. L'invention est définie par les revendications indépendantes 1 et 15.

Les caméras existantes permettent de générer un fichier de données de type vidéo. Un tel fichier correspond à un film comprenant une vue de l'espace limitée par l'angle de champ de la caméra, qui peut être par exemple autour de 170 degrés. Pour obtenir une vision plus large et plus complète de l'espace, notamment dépassant largement le champ de vision visuel humain, il est connu d'utiliser simultanément plusieurs caméras, orientées dans des directions différentes, pour obtenir plusieurs films complémentaires de l'espace au même instant. Toutefois, l'exploitation de ces différents films vidéo n'est pas facile avec les solutions existantes : il est connu de fusionner ces films pour générer un seul film réunissant les différents films indépendants, ce film unique résultant présentant une vision à très grand angle de champ, de type panoramique par exemple. Cette fusion n'est toutefois pas optimisée et ne permet pas d'obtenir un film de qualité satisfaisante. En effet, cette fusion nécessite de nombreuses opérations manuelles d'un opérateur, l'utilisation de plusieurs outils logiciels distincts et non directement compatibles, ce qui nécessite un temps important, n'est pas convivial, et entraîne une perte de qualité importante au niveau vidéo.

En effet, il existe notamment des situations dans lesquelles l'ensemble des caméras bougent dans le temps, et/ou un ou plusieurs objets sont en mouvement par rapport aux caméras. Dans ces situations, des décalages par rapport à l'horizon, des changements soudains de luminosité captée par une certaine caméra, par exemple si elle est soudainement face au soleil, etc., apparaissent, qui se répercutent par une dégradation, une instabilité et/ou un rendu visuel incohérent du film résultant de la fusion.

US6788333 B1 divulgue un système et un processus pour générer une vidéo panoramique en acquérant plusieurs vidéos de la scène représentée. La phase d'acquisition comprend également une procédure de calibration qui fournit des informations sur le monture de caméras utilisée pour capturer les vidéos et qui est utilisée lors de la phase suivante pour créer la vidéo panoramique.

US2009262206 A1 divulgue un système pour fournir une vidéo panoramique créée à partir d'une première caméra et d'une seconde caméra à un système d'affichage électronique qui comprend un circuit de traitement configuré pour associer une vue d'une caméra à une position approximative. Le circuit de traitement est en outre configuré pour établir des données de relation entre la première caméra et une deuxième caméra en utilisant la position approximatif. Le circuit de traitement est en outre configuré pour transformer la vidéo de la première caméra par rapport à la vidéo de la deuxième caméra, la transformation basée sur les données de relation.

Ainsi, il existe un besoin d'une solution améliorée de fusion de plusieurs fichiers de données vidéo qui ne présente pas tout ou partie des inconvénients de l'état de la technique.

Plus précisément, un premier objet de l'invention est une solution de fusion de plusieurs fichiers de données vidéo qui permet d'obtenir un film résultant de bonne qualité.

Un second objet de l'invention est une solution de fusion de plusieurs fichiers de données vidéo conviviale et rapide.

A cet effet, l'invention repose sur un procédé de fusion de plusieurs flux vidéo, caractérisé en ce qu'il comprend les étapes suivantes :
- définition de plusieurs instants de référence,
- Calcul de la valeur de référence de paramètres de construction d'un algorithme de construction d'une image panoramique permettant de réunir les images des flux vidéo respectivement pour chaque instant de référence à l'aide de l'algorithme de construction d'une image panoramique,
- fusion des flux vidéo par construction d'images panoramiques regroupant les images des différents flux vidéo à un même instant, cette construction d'images panoramiques utilisant, à au moins un instant, des paramètres de construction d'une image panoramique dont la valeur est calculée à partir d'au moins une valeur de référence de ces paramètres de construction.

Le procédé de fusion de plusieurs flux vidéo peut comprendre les étapes suivantes :
- réception par un moyen de communication dans une mémoire électronique d'un dispositif de fusion de plusieurs flux vidéo sources provenant de plusieurs caméras, ces flux vidéo sources comprenant des zones de recoupement ;
- choix d'un algorithme de construction d'une image panoramique définissant et nécessitant plusieurs paramètres de construction géométriques et radiométriques ;
- calcul par une première phase de l'algorithme de construction d'une image panoramique des valeurs de référence de ces paramètres de construction aux instants de référence ;
- calcul aux autres instants des valeurs des paramètres de construction à partir des valeurs de référence de ces paramètres de construction, sans mettre en oeuvre la première phase de l'algorithme de construction d'une image panoramique ;
- fusion des flux vidéo sources par construction d'images panoramiques regroupant les images des différents flux vidéo sources datées du même instant, en mettant en oeuvre une seconde phase de construction d'une image panoramique de l'algorithme de construction et en utilisant les valeurs des paramètres de construction telles que définies aux étapes précédentes.

L'invention est plus précisément définie par les revendications.

L'invention porte aussi sur un dispositif de fusion de plusieurs flux vidéo comprenant au moins un calculateur et une mémoire, caractérisé en ce qu'il met en oeuvre les étapes du procédé de fusion de plusieurs flux vidéo tel qu'explicité précédemment.

L'invention porte aussi sur une interface homme machine d'un tel dispositif de fusion de plusieurs flux vidéo, caractérisé en ce qu'elle comprend une interface de saisie d'au moins un instant de référence ti pour le calcul des paramètres de construction panoramique pour la fusion des images des flux vidéo.

L'interface homme machine d'un dispositif de fusion de plusieurs flux vidéo peut comprendre tout ou partie des interfaces suivantes :
- une fenêtre de présentation des flux vidéo à fusionner, avec une fonctionnalité d'ajout ou de suppression de flux vidéo ;
- une zone de saisie d'un instant de début et de fin de la fusion ;
- une fenêtre de visualisation d'une image panoramique résultant de la fusion des images des différents flux vidéo à un instant de référence ti ;
- une fenêtre d'aperçu d'un flux vidéo large champ représentant la fusion des flux vidéo.

L'invention porte aussi sur un système de fusion de flux vidéo, caractérisé en ce qu'il comprend un dispositif de fusion de flux vidéo tel qu'exposé précédemment et un support multi-caméras comprenant au moins deux logements pour la fixation de caméras, notamment tels que deux caméras adjacentes soient orientées selon une orientation sensiblement perpendiculaire entre elles.

Le système de fusion de flux vidéo peut comprendre un lecteur d'un flux vidéo large champ résultant de la fusion de plusieurs flux vidéo.

L'invention porte aussi sur un procédé de fusion de plusieurs flux vidéo tel qu'explicité précédemment, caractérisé en ce qu'il comprend une étape préalable de positionnement d'au moins un support multi-caméras au niveau d'une scène de spectacle, au sein d'une enceinte sportive, sur un athlète pendant une épreuve sportive, sur un engin de transport, sur un drone ou un hélicoptère, une étape consistant à filmer plusieurs flux vidéo sources à partir de caméras positionnées sur ce au moins un support multi-caméras, une phase de fusion desdits plusieurs flux vidéo sources selon un procédé de fusion tel qu'explicité précédemment, et une étape de visualisation sur au moins un espace d'affichage d'au moins un écran du flux vidéo large champ résultant.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement la structure du dispositif de fusion de flux vidéo selon un mode de réalisation de l'invention ;
La figure 2 représente schématiquement les étapes du procédé de fusion de flux vidéo selon un mode de réalisation de l'invention ;
La figure 3 représente un menu d'une interface homme machine selon le mode de réalisation de l'invention.

La solution retenue permet de fusionner au mieux plusieurs fichiers de type vidéo, que nous appelons plus simplement « flux vidéo » ou « flux vidéo sources », par une optimisation au moins partiellement automatique des opérations de fusion, ces opérations automatiques permettant de garantir une qualité satisfaisante du résultat. Avantageusement, le procédé permet l'intervention manuelle d'un opérateur par une interface homme machine conviviale selon un mode de réalisation de l'invention. Le résultat représente ainsi un compromis de quelques interventions manuelles et d'opérations automatiques, pour atteindre finalement une qualité optimale de manière rapide et conviviale pour l'opérateur. En remarque, le terme de flux vidéo utilisé de manière simplifiée désigne aussi un flux audio-vidéo, la bande son (audio) étant aussi, de manière préférentielle mais optionnelle, récupérée en parallèle des traitements qui seront surtout détaillés pour la partie vidéo.

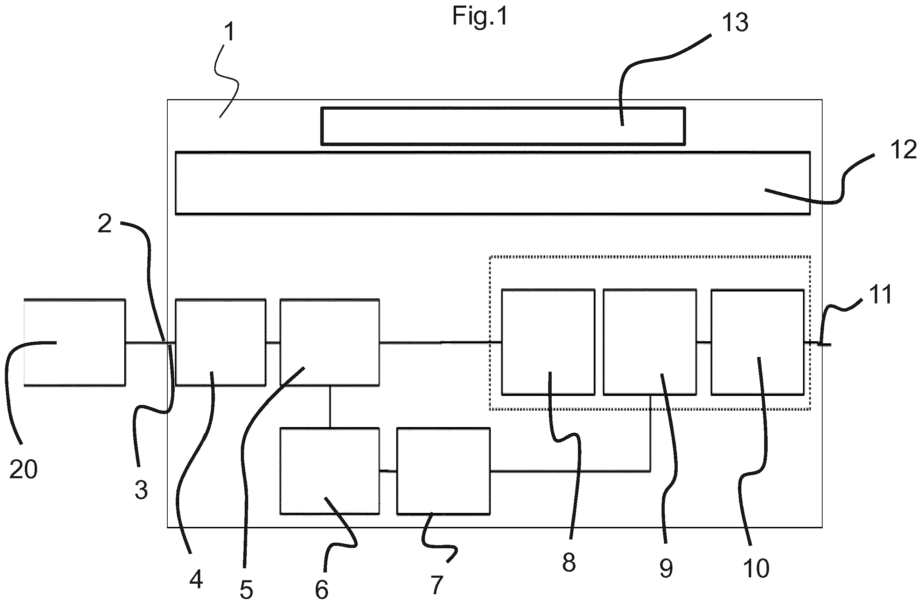

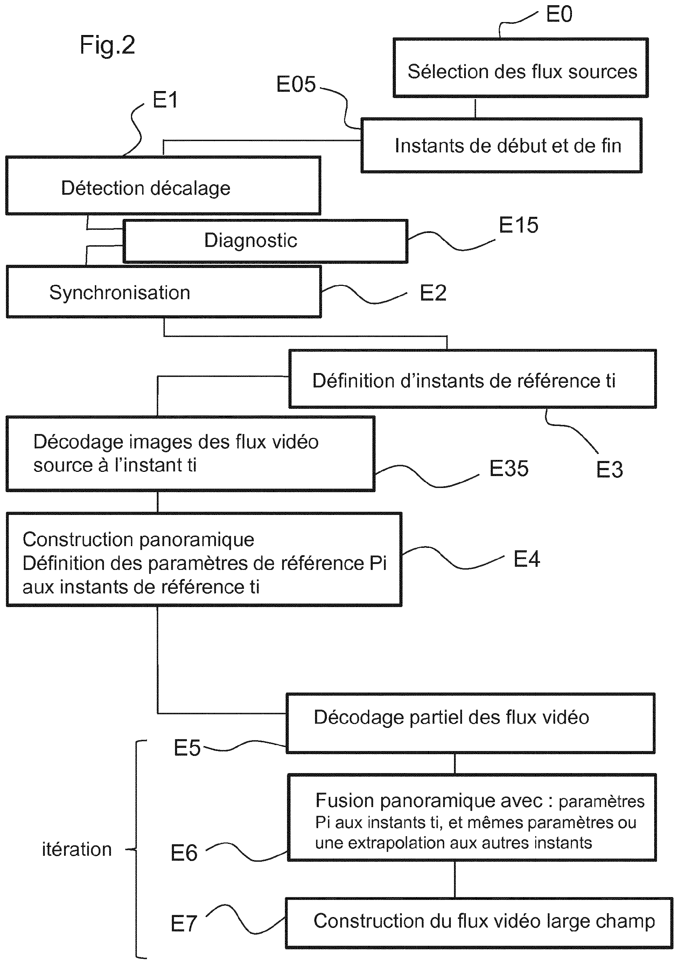

Un dispositif et un procédé de fusion de flux vidéo selon un mode de réalisation de l'invention vont maintenant être détaillés, en référence avec les figures 1 et 2.

Le dispositif de fusion 1 de flux vidéo comprend une entrée 2, qui peut se présenter sous la forme d'un connecteur, par exemple de type USB, par lequel il reçoit par un moyen de communication 3, dans une mémoire non représentée pour un traitement par plusieurs blocs 4-10, différents flux vidéo sources provenant de plusieurs caméras 20.

Avantageusement, ces différents flux vidéo ont été générés par plusieurs caméras 20 fixées sur un même support multi-caméras, couramment dénommé par sa dénomination anglo-saxonne de « Rig », qui présente l'avantage de permettre de filmer plusieurs vues depuis un même point de vue et de garantir une orientation choisie et constante entre les différentes caméras. Un tel support multi-caméras peut par exemple permettre la fixation de six caméras, tel que les axes des champs de vision de deux caméras adjacentes sont orientées dans des directions sensiblement perpendiculaires, ce qui permet d'obtenir une vision de tout l'espace autour du point de prise de vue. De plus, les différentes caméras peuvent être considérées fixes les unes par rapport aux autres. Naturellement, le procédé est adapté pour le traitement de tout nombre de flux vidéo, provenant d'au moins deux caméras, disposées sur tout support, éventuellement légèrement mobiles l'une par rapport à l'autre.

Le dispositif de fusion 1 comprend ensuite un premier bloc 4 qui met en oeuvre une première étape E1 de détection des décalages temporels entre les différents flux vidéo reçus. En effet, le dispositif de fusion 1 est adapté pour fonctionner avec un support multi-caméras sur lequel sont montées des caméras qui sont indépendantes et fonctionnent avec des horloges indépendantes. Ainsi, les flux vidéo sources reçus sont décalés dans le temps. Ce décalage est par exemple causé par un instant de démarrage différent des caméras, par une référence temporelle distincte des caméras, et/ou par un décalage glissant dû à des différences d'horloge interne des caméras. En sortie de ce premier bloc 4, le décalage temporel entre deux flux vidéo sources quelconques est connu.

Cette première étape E1 utilise les bandes sons des différents flux vidéo et met en oeuvre la reconnaissance d'un son identique sur les différents flux vidéo, pour en déduire leur décalage dans le temps. Selon un mode de réalisation, cette recherche d'un son particulier pour en déduire le décalage des flux vidéo est limitée autour d'un temps de référence indiqué par un opérateur, par exemple indiqué par l'intermédiaire d'une interface homme machine de manière similaire à l'étape E30 de sélection d'un temps de référence qui sera décrite ultérieurement. En variante, cette recherche peut être entièrement automatique. Elle peut aussi être réalisée sur toute la durée des flux vidéo sources.

Dans tous les cas, le dispositif peut ensuite mettre en œuvre une étape optionnelle intermédiaire E15 de diagnostic automatique du décalage mesuré, par la mesure automatique de la qualité du recalage obtenu. Pour cela, cette étape peut notamment détecter d'éventuelles incohérences entre tous les décalages calculés pour toutes les combinaisons de deux flux vidéo parmi l'ensemble des flux vidéo sources considérés. Le procédé peut ensuite soit transmettre le résultat de ce diagnostic à un opérateur, par une interface homme machine, soit déterminé automatiquement que ce résultat est satisfaisant ou non, par une comparaison avec un seuil prédéfini par exemple, et éventuellement mettre en œuvre un nouveau calcul de décalage en cas de résultat insuffisant.

Ensuite, le procédé met en œuvre une seconde étape E2 de synchronisation des flux vidéo dans un second bloc 5 du dispositif de fusion de flux vidéo. Cette seconde étape consiste en une opération de décalage inverse des flux vidéo pour les synchroniser au mieux. Pour cela, un premier flux est choisi comme flux vidéo de référence, de préférence le flux vidéo ayant démarré le dernier dans le temps, puis chaque autre flux est synchronisé avec ce flux vidéo de référence. Pour cela, le temps de décalage obtenu lors de la première étape est utilisé pour en déduire pour chaque flux vidéo le nombre d'images de décalage par rapport au flux vidéo de référence. En sortie de ce bloc 5 de synchronisation, les images (frame en dénomination anglo-saxonne) les plus proches dans le temps de chaque flux vidéo sont alors connues. Chaque flux peut être inversement décalé du nombre d'images de décalage pour obtenir sa synchronisation avec le flux de référence. En remarque, les images de chaque flux peuvent rester malgré ce mécanisme légèrement décalées les unes avec les autres, et donc non parfaitement synchronisées, mais ce décalage résiduel est minimisé par ces étapes de synchronisation.

D'autre part, les bandes son de chaque flux vidéo sont de même décalées d'un même temps de décalage que la partie vidéo qui leur est associée au sein du flux audio-vidéo, et sont aussi synchronisées.

Les étapes précédentes E1, E15, E2 sont optionnelles. En effet, le dispositif de fusion 1 peut aussi recevoir en entrée des flux vidéo déjà synchronisés par un autre moyen extérieur au dispositif de fusion, comme par un support multi-caméras sophistiqués intégrant une horloge commune gérant les différentes caméras. Dans un tel cas, la synchronisation n'est plus nécessaire. Dans tous les autres cas, elle est fortement conseillée, voire obligatoire, pour obtenir un flux vidéo de qualité en sortie.

Le procédé de fusion des flux vidéo sources repose sur l'association d'images panoramiques obtenues à partir des différentes images des flux vidéo sources. Ainsi, à titre d'exemple, si chaque flux vidéo source comprend vingt-quatre images par seconde, la vidéo résultante, que nous appelons vidéo large champ, est construite par les vingt-quatre images panoramiques par seconde construites à partir des vingt-quatre fusions des images respectives provenant des différentes caméras sources.

Pour la construction d'une image panoramique, le procédé utilise une méthode connue de l'état de la technique, dont des éléments existants sont par exemple mentionnés dans le document US6711293. Lors de cette construction d'image panoramique, un algorithme de calcul est utilisé. Un tel algorithme nécessite au préalable la définition de plusieurs paramètres, que nous appelons paramètres de construction d'image panoramique. La détermination de ces paramètres est délicate et présente une grande importance pour la qualité de l'image panoramique résultante. Lorsque ces paramètres sont déterminés, l'algorithme permet de regrouper les images sources pour ne former qu'une seule image de plus grand format, dite image panoramique. Pour cela, l'algorithme doit notamment gérer des zones de recoupement des différentes images, du fait que plusieurs caméras peuvent avoir filmé des zones communes de l'espace, et des zones de non recoupement, filmées par une seule caméra. Il doit aussi traiter les zones frontières entre les images provenant de différentes caméras pour garantir une frontière continue et indécelable visuellement. Le traitement des zones de recoupement est particulièrement délicat car il faut combiner les informations provenant de plusieurs caméras, afin d'obtenir un résultat continu dans ces zones et de qualité optimale. Concrètement, un pixel d'une zone de recoupement sera construit à partir de l'information provenant de plusieurs caméras, et non par le choix d'une seule caméra. En remarque, une simple juxtaposition de films ne représente pas une fusion au sens de l'invention.

Dans l'approche retenue, la construction d'une image panoramique consiste donc en une fusion qui met en œuvre des calculs complexes par un algorithme de construction panoramique, qui définit et utilise des paramètres de construction d'image panoramique, qui comprennent notamment des paramètres géométriques et des paramètres radiométriques, et dont les valeurs sont calculées par une première phase de l'algorithme de construction, pour leur utilisation dans une seconde phase de l'algorithme qui réalise la fusion. Ces paramètres de construction d'une image panoramique utilisés par l'algorithme de construction comprennent à titre d'exemple :
- des paramètres extrinsèques des caméras, notamment relatifs à leurs positions relatives, et/ou leur orientation ; et/ou
- des paramètres intrinsèques des caméras, parmi lesquels la distorsion, la focale, l'alignement axe du capteur/lentille ; et/ou
- la position globale du support multi-caméras par rapport au référentiel, soit par rapport à l'horizon ; et/ou
- la correction de couleur et de luminosité ; et/ou
- le masquage des défauts ; et/ou
- la projection de la vidéo de sortie.

Nous utiliserons par la suite le terme de paramètres de construction d'une image panoramique pour désigner le jeu de tous les paramètres utilisés par l'algorithme de construction d'une image panoramique choisi. Le principe de l'invention est adapté à tout type d'algorithme de construction d'une image panoramique, comprenant les propriétés mentionnées ci-dessus, et ne porte pas spécifiquement sur cet algorithme en tant que tel. Toutefois, lorsqu'un algorithme est choisi, il est utilisé sur toute la durée considérée de la fusion des flux vidéo sources. Ainsi, le jeu de paramètres de construction est défini et reste inchangé sur toute la durée de la fusion, seule la valeur d'un ou plusieurs de ces paramètres étant susceptible de changer ou non.

Ces paramètres de construction d'une image panoramique permettent d'atteindre une cohérence spatiale entre les différentes images provenant des flux vidéo sources à un instant donné. Toutefois, pour garantir d'atteindre une cohérence de la vidéo large champ résultant de la fusion des flux vidéo sources, il est nécessaire d'assurer de plus une cohérence temporelle entre les différentes images panoramiques construites puis assemblées pour former cette vidéo.

En effet, comme cela a été évoqué en préambule, l'ensemble des caméras sont susceptibles de se déplacer, en restant fixes ou non les unes par rapport aux autres, et/ou un ou plusieurs objets peuvent être en mouvement par rapport aux caméras. Dans ces situations notamment, les paramètres de construction d'une image panoramique calculés à un premier instant pour obtenir une image panoramique cohérente ne sont plus automatiquement adaptés pour obtenir, soit une image panoramique optimale à un second instant, soit une image panoramique à un second instant cohérente avec la première image panoramique obtenue au premier instant. En effet, les déplacements mentionnés peuvent par exemple engendrer des décalages par rapport à l'horizon, des changements soudains de la luminosité captée par une certaine caméra, par exemple si elle est soudainement face au soleil, etc., qui se répercutent par une dégradation, une instabilité et/ou un rendu visuel incohérent si la vidéo large champ résultante ne prend pas en compte ces phénomènes.

D'autre part, si les valeurs des paramètres de construction d'une image panoramique étaient recalculées pour chaque construction panoramique, soit pour la génération des vingt-quatre images par seconde selon les standards courants dans l'exemple considéré, sur toute la durée de la vidéo, cela aurait pour premier effet d'exiger une puissance et/ou un temps de calcul important et pour second effet de ne pas garantir la continuité entre les différentes images panoramiques successives. En effet, la vidéo large champ résultante pourrait alors présenter des problèmes d'incohérence temporelle, se manifestant par exemple par des sauts visibles sur cette vidéo obtenue, dont la qualité ne serait donc pas satisfaisante.

C'est pourquoi la solution retenue repose d'abord sur le choix d'un algorithme de construction d'une image panoramique, qui définit et nécessite des paramètres de construction d'une image panoramique, puis met en œuvre une méthode pour atteindre une cohérence temporelle lors de la fusion des flux vidéo sources, basée sur une évolution maîtrisée dans le temps des valeurs de ces paramètres de construction des images panoramiques, comme cela va être détaillé ci-dessous. En remarque, cette évolution porte sur la modification d'un nombre minimal nécessaire de valeurs de paramètres de construction parmi le jeu de paramètres de construction des images panoramiques, pour atteindre une cohérence temporelle satisfaisante et une grande qualité de la vidéo résultante, tout en minimisant les calculs effectués.

Pour cela, le procédé de fusion de plusieurs flux vidéo comprend une étape E3 consistant à définir plusieurs instants de référence ti sur la durée de la fusion vidéo à réaliser. Ces instants de référence ti sont définis de manière chronologique. Le premier instant t1 est choisi vers le début de cette durée, à un instant qui semble propice aux calculs mis en œuvre pour former une première image panoramique réunissant les images des flux vidéo sources à cet instant. Ensuite, le second instant t2 est choisi lorsque les conditions des flux vidéo sources sont sensiblement modifiées de sorte que la construction d'image panoramique nécessite des paramètres de construction d'image panoramique différents, et ainsi de suite.

Pour réaliser ce choix des instants de référence ti, un premier mode de réalisation consiste en une saisie manuelle, par un opérateur, de tout ou partie de ces instants, par l'intermédiaire d'une interface homme machine, comme cela sera illustré par la suite. Dans une telle réalisation, l'opérateur peut ainsi visualiser les différents flux vidéo sources et détecter visuellement certains changements à certains instants nécessitant de définir pour ces instants des valeurs de paramètres de construction d'une image panoramique adaptées.

Un second mode de réalisation consiste en un choix automatique de ces instants de référence ti. Comme cela a été mentionné précédemment, le choix de ces instants de référence repose alors sur un diagnostic des flux vidéo sources et la détection automatique d'événements particuliers, selon des critères comme un changement de luminosité sur au moins un flux vidéo source, et/ou un mouvement significatif des caméras entraînant un changement dans un repère tridimensionnel, etc. Des seuils peuvent être prédéfinis pour chacun de ces critères pour pouvoir déterminer automatiquement qu'un instant de référence doit être retenu à l'instant pour lequel un critère dépasse un seuil.

Les seuils permettant de retenir un instant de référence ou non sont ajustables, en fonction du nombre d'instants de référence ti souhaité. Il y en aura au moins deux sur toute la durée de la fusion à réaliser. De préférence, le nombre d'instants de référence est choisi au minimum pour atteindre une qualité visuelle satisfaisante, au-delà de laquelle toute amélioration deviendrait imperceptible pour l'œil humain. Naturellement, ce nombre dépend des flux vidéos sources et ne peut pas être prédéfini. Toutefois, on, note que, dans la plupart des cas, un maximum de un instant de référence par seconde suffit. Au pire, dans des conditions extrêmes, il est possible de redéfinir les paramètres de construction d'images panoramiques pour toutes les images des flux vidéo sources (soit 24 par seconde en reprenant ce standard à titre d'exemple non limitatif), c'est-à-dire pour chaque construction d'image panoramique, pendant une courte période, avant de revenir à un taux tel que mentionné précédemment. Ainsi, comme cela ressort des éléments précédents, ce choix dépend naturellement des flux vidéo sources et des conditions particulières de la fusion à traiter mais est aussi déterminé pour former un compromis entre la qualité de la vidéo large champ résultante et la lourdeur du calcul mis en œuvre.

Pour chaque instant de référence ti déterminé à l'étape E3, une étape E35 de décodage des images de chaque flux vidéo source correspondant à cet instant de référence ti est réalisée. En remarque, ce décodage permet de transformer les données des flux vidéo qui se trouvent initialement dans un format vidéo standard, par exemple en MPEG, MP4, etc., vers un format différent par lequel les traitements ultérieurs par un calculateur, décrits ci-après, sont possibles.

Ensuite, une étape E4 de construction d'une image panoramique à partir de ces images décodées est réalisée, à l'aide de l'algorithme de construction d'une image panoramique choisi. La mise en œuvre de cet algorithme définit notamment automatiquement dans une première phase des valeurs optimales des paramètres de construction, explicités précédemment.

Chaque construction panoramique à chaque instant ti est ensuite diagnostiquée, selon une étape de diagnostic avantageuse mais optionnelle, soit automatiquement, soit manuellement par une présentation visuelle à un opérateur de l'image panoramique sur un écran, ce dernier ayant alors l'opportunité de modifier certaines valeurs de paramètres de construction de l'image panoramique. Dans tous les cas, si le diagnostic n'est pas bon, le procédé peut proposer de modifier l'instant de référence ti, soit automatiquement, soit manuellement, pour une nouvelle mise en œuvre au moins partielle des étapes E3 à E4 avec des instants de référence ti différents, qui peuvent être plus favorables aux algorithmes de construction panoramique utilisés. Lorsque le résultat est satisfaisant pour chaque instant ti, les valeurs de référence des paramètres de construction d'une image panoramique Pi associées à ces instants de référence ti sont mémorisées, pour leur application ultérieure à la fusion des flux vidéo. Par soucis de simplification, nous désignerons parfois par la suite par l'expression « paramètre de construction de référence » la valeur de référence dudit paramètre de construction à un instant de référence.

En remarque, le dispositif de fusion 1 selon le mode de réalisation comprend deux blocs complémentaires 6, 7, qui permettent respectivement de définir les instants de référence ti et les paramètres de construction de référence Pi, qui sont utilisés par la suite lors de la phase de fusion des flux vidéo, qui sera détaillée plus loin. Ces deux blocs 6, 7 mettent donc en œuvre les étapes E3, E35 et E4 du procédé de fusion de flux vidéo.

La détermination des instants de référence ti et des paramètres de construction de référence Pi correspondants peut être obtenue différemment du procédé décrit ci-dessus. Par exemple, il est possible de sélectionner chaque instant de référence ti et de calculer les paramètres de construction de référence Pi associés avant de choisir un instant de référence ultérieur. Pour choisir cet instant de référence ti+1 ultérieur, il est possible de construire un flux vidéo large champ à partir des paramètres de construction de référence Pi, et de détecter, automatiquement ou visuellement par un opérateur, un instant ultérieur ti+1, par exemple pour lequel ces paramètres de construction ne sont manifestement plus adaptés, du fait de la dégradation de la qualité de cette vidéo large champ.

Comme cela a été vu précédemment, les étapes décrites ci-dessus peuvent être automatisées, dans des variantes de réalisation du dispositif. Notamment, au moins un instant de référence ti peut être choisi de manière aléatoire dans une réalisation la plus simple, ou quelques instants prédéfinis et répartis de manière aléatoire ou selon une répartition homogène sur la durée de la fusion à réaliser pourraient être choisis, dans une mise en œuvre simple du procédé de l'invention.

Pour améliorer l'approche précédente, une étape de diagnostic automatique du résultat panoramique obtenu, comme mentionné précédemment, permet alors d'écarter les choix inappropriés d'instants de référence. Selon une approche plus élaborée, le procédé détecte automatiquement les modifications des flux vidéo sources selon des critères prédéfinis, comme abordé précédemment, qui permettent qualitativement et objectivement de déterminer les instants de référence.

Selon une autre variante de réalisation, un plus grand nombre d'instants sont initialement sélectionnés, notamment automatiquement choisis, par exemple obtenus automatiquement selon une période prédéfinie sur tout ou partie de la durée sélectionnée pour le flux vidéo large champ. Ensuite, une étape de combinaison des différents résultats obtenus pour les paramètres de construction de panorama calculés sur plusieurs instants choisis est mise en œuvre. Cette combinaison consiste par exemple en une moyenne de différents paramètres de construction d'image panoramique, cette moyenne s'entendant au sens large et pouvant être arithmétique, géométrique, ou finalement être remplacée par toute fonction mathématique permettant de déduire une valeur finale pour chaque paramètre de construction de panorama à partir des différentes valeurs obtenues. Ainsi, ces valeurs de paramètres obtenues en regroupant plusieurs jeux de paramètres obtenus à des instants différents sont associées à un instant de référence qui correspond lui-même à une combinaison de plusieurs instants initialement sélectionnés. Cette approche permet alors d'obtenir des instants de référence ti et des paramètres de construction de référence Pi pour la construction d'image panoramique obtenus à partir d'une combinaison de plusieurs instants considérés, ce qui peut donner un résultat plus pertinent.

Selon une autre variante de réalisation, un opérateur ou une étape automatique du procédé détermine un instant de référence ti, de préférence considéré favorable, voire aléatoirement, puis le procédé met en œuvre automatiquement une étape de calcul des paramètres de construction d'image panoramique sur plusieurs instants choisis sur une plage temporelle répartie au voisinage de cet instant de référence ti. Cette plage temporelle peut être déterminée par des paramètres (durée, proportion avant et/ou après l'instant de référence) prédéfinis préalablement, ou saisis par l'opérateur par l'intermédiaire d'une interface homme machine. Ensuite, les paramètres de référence de construction d'image panoramique Pi sont finalement déterminés par la combinaison des différents paramètres obtenus pour chacun de ces instants choisis sur ladite plage temporelle, de manière similaire au principe explicité ci-dessus dans la variante de réalisation précédente.

En sortie du bloc 7 du dispositif et après l'étape E4 de définition de paramètres de construction de référence Pi, le procédé engage alors la phase de fusion des flux vidéo pour obtenir en sortie un flux vidéo unique, qui cumule des données vidéo provenant de chaque flux vidéo. Pour cela, ce flux vidéo résultant est dénommé flux vidéo large champ, comme cela a été utilisé précédemment, même si ce flux vidéo peut toutefois présenter toute valeur de champ de vision puisqu'il dépend des flux vidéo considérés en entrée. De même, le terme d'image panoramique est utilisé pour désigner une image obtenue par le regroupement/fusion de plusieurs images, le résultat pouvant former un angle de vue très large, mais sans toutefois exclure les réalisations provenant par exemple d'un faible nombre d'images et/ou d'images présentant des angles de vue étroits. Dans cette phase de fusion de plusieurs flux vidéo sources, le procédé met avantageusement en œuvre une répétition des étapes suivantes, sur toute la durée choisie de la fusion des flux vidéo.

D'abord, le procédé met en œuvre une étape E5 de décodage d'une image ou de plusieurs images pour chaque flux vidéo à un instant donné ou autour de cet instant, dans un bloc 8 du dispositif de fusion. Ces images décodées sont mémorisées dans une mémoire du dispositif pour leur traitement à l'étape suivante. En remarque, le fait de ne procéder ici qu'à un décodage partiel, de préférence très restreint, par exemple à moins de dix images, voire trois ou moins par flux vidéo, est avantageux parce que cela n'exige pas le recours à une taille mémoire importante. En effet, chaque flux vidéo possède une taille raisonnable dans son format standard codé, qui intègre une méthode de compression de données, mais occupe une taille très supérieure dans un format décodé.

Ensuite, le procédé met en œuvre une étape E6 de construction d'une image panoramique, dans un bloc 9 du dispositif de fusion, réunissant pour chaque flux vidéo, l'image correspondant sensiblement à l'instant donné. Une image panoramique est alors construite à partir de l'image de chaque flux vidéo correspondant à l'instant donné considéré.

Comme cela a été explicité précédemment, cette construction est réalisée à l'aide des valeurs des paramètres de construction de référence qui ont été calculées au préalable par les étapes E3 et E4 décrites précédemment, ce qui permet une construction rapide. Pour cela, les paramètres de construction de référence Pi ont été définis aux instants de référence ti. Pour en déduire les valeurs des paramètres de construction d'image panoramique pour tous les instants, notamment hors les instants de référence, à utiliser pour toutes les constructions d'images panoramiques à partir de toutes les images des flux vidéo sources, il est choisi de réaliser un calcul d'interpolation mathématique, permettant de joindre les paramètres de construction de référence Pi de manière progressive et continue sur toute la durée de la fusion à réaliser, tout en reprenant précisément ou de manière relativement proche les paramètres de construction de référence aux instants de référence. Cette méthode permet finalement de définir l'évolution dans le temps des valeurs des paramètres de construction d'image panoramique, par une fonction continue passant par des points clés.

Pour la mise en œuvre de l'interpolation mathématique, on peut utiliser automatiquement l'une des approches mathématiques suivantes : linéaire, Bézier, cubique, Spline, b-Spline, etc.

En remarque, le procédé peut comprendre une étape de sélection de la méthode d'interpolation par un opérateur, par une interface homme-machine. Ainsi, si le résultat ne satisfait pas l'opérateur, il peut recommencer la fusion des flux vidéo en modifiant la méthode d'interpolation. Selon une autre remarque, cette interpolation est réalisée sur chacun des paramètres de construction du jeu de paramètres de construction d'image panoramique, quand ces paramètres sont modifiés, c'est-à-dire quand leur valeur varie dans le temps.

Selon une réalisation de l'invention, cette interpolation peut être réalisée de manière indépendante pour chaque paramètre de construction du jeu de paramètres. En général, certains paramètres de construction restent constants, ce qui ne nécessite pas de calcul, alors que d'autres peuvent varier et nécessiter une interpolation mathématique telle que décrite précédemment. D'autre part, parmi les paramètres de construction dont la valeur change, l'amplitude de leur changement peut être très différente, ce qui peut alors nécessiter des interpolations mathématiques différentes pour ces différents paramètres.

L'interpolation mathématique d'un certain paramètre de construction peut être effectuée sur toute la durée de la fusion vidéo, à partir de tous les paramètres de construction de référence à tous les instants de référence, ou sur des intervalles réduits uniquement, un paramètre de construction conservant dans ce dernier cas une valeur constante, de préférence obtenue à un instant de référence, sur les autres intervalles.

Finalement, selon un mode de réalisation de l'invention, les paramètres de construction d'image panoramique à un instant donné sont choisis parmi l'une des solutions suivantes :
- on prend les valeurs des paramètres de construction de référence Pi déterminées à l'instant de référence ti inférieur le plus proche, pour tous les paramètres qui restent constants, inchangés ;
- si on détecte qu'un certain paramètre de construction change au prochain instant de référence ti+1, voire à un instant de référence ultérieur ou quelconque, il est possible soit d'obtenir une valeur résultant d'une interpolation mathématique en prenant en compte par exemple les valeurs de référence obtenues aux instants de référence qui entourent l'instant donné, soit de conserver une valeur constante égale à une valeur de référence en cas d'éloignement supérieur à un certain seuil du prochain instant de référence, l'interpolation mathématique étant réservée sur un intervalle non encore atteint, à proximité d'un prochain instant de référence.

Ainsi, soit le procédé met en œuvre un calcul progressif par interpolation des valeurs des paramètres de construction panoramique P pour chaque instant t hors des instants de référence ti, soit il conserve les mêmes valeurs des paramètres de construction de référence Pi sur une partie de cette durée puis met en œuvre une ou plusieurs interpolations sur une autre partie de cette durée.

Finalement, l'approche retenue repose sur le choix d'un algorithme de construction d'images panoramiques, pour lequel :
- les valeurs de tout ou partie des paramètres de construction sont calculées par une première phase de l'algorithme, et sont ainsi optimisées, pour certains instants de référence ;
- Ces valeurs de référence sont de plus établies par l'algorithme à partir des flux vidéos sources réels à fusionner, elles sont donc spécifiquement calculées et adaptées aux flux vidéos à traiter, et ne sont pas prédéfinies séparément, par exemple dans une phase de calibration qui donnerait des valeurs générales pas nécessairement optimisées pour les flux vidéos spécifiques à fusionner. Ainsi, les valeurs de ces paramètres de construction changent quand on change les flux vidéos sources à fusionner ;
- les valeurs des paramètres de construction sont calculées pour les autres instants hors des instants de référence à partir d'une ou de plusieurs valeurs de référence calculées aux instants de référence, sans mettre en œuvre la première phase de l'algorithme de construction d'images panoramiques, afin d'obtenir un calcul plus simple, plus rapide et moins coûteux, et garantissant une cohérence spatiale et temporelle de la vidéo large champ résultante.

L'approche retenue permet ainsi d'atteindre les avantages suivants :
- la vidéo large champ résultante présente des images de qualité optimale aux instants de référence, pour lesquels les valeurs des paramètres de construction d'image panoramique à partir des images sources ont été particulièrement optimisées,
- la vidéo large champ résultante présente une cohérence temporelle puisque les valeurs des paramètres de construction d'image panoramique sont modifiées dans le temps pour s'adapter aux variations de situations des différentes caméras de prise de vues ;
- la vidéo large champ résultante présente une cohérence temporelle puisque cette modification des valeurs des paramètres de construction d'image panoramique est mathématiquement lissée, continue ;
- le calcul de la vidéo large champ résultante reste relativement simple puisqu'un faible nombre d'instants de référence et/ou un faible nombre de paramètres à modifier peuvent suffire pour obtenir une qualité satisfaisante.

A titre d'exemple non limitatif, le procédé décrit précédemment peut permettre d'assurer une stabilité de la représentation de l'horizon sur la vidéo large champ résultante, même si la scène filmée change de position par rapport à cet horizon ou si le support multi-caméras portant les caméras change d'orientation par rapport à l'horizon. On s'aperçoit que l'horizon peut être maintenu stable sur la vidéo large champ résultante en modifiant seulement deux paramètres de construction utilisés par l'algorithme de construction d'image panoramique : ces deux paramètres, appelés par leur dénomination anglo-saxonne de « Yaw » et « Pitch », représentent deux orientations angulaires du support multi-caméra dans le repère sphérique. En variante, le troisième paramètre d'orientation, connu par sa dénomination anglo-saxonne de « Roll », peut aussi être modifié. Toutefois, le changement de deux ou trois paramètres de construction uniquement, correspondant à des paramètres extrinsèques des caméras, relatifs à leur orientation, suffit à garantir le maintien stable de l'horizon sur la vidéo large champ résultante, quel que soit le mouvement du support multi-caméras relativement à la scène filmée.

Enfin, dans une dernière étape E7 de construction du flux vidéo large champ, mise en œuvre par un bloc 10 du dispositif de fusion, l'image panoramique obtenue est ajoutée au flux vidéo large champ précédemment construit et le tout est encodé au format vidéo. Cet encodage permet de former le flux vidéo large champ de sortie dans un format vidéo standard choisi, comme MPEG, MP4, H264, etc., par exemple.

Comme cela apparaît, le mécanisme d'itération des étapes E5 à E7 sur la durée choisie permet la construction progressive du flux vidéo large champ : cela évite d'avoir à décoder l'intégralité des flux vidéo pour leur fusion ultérieure, comme mentionné précédemment, ce qui nécessiterait un espace mémoire très important dans le dispositif, et en complément, cela permet aussi d'éviter de mémoriser l'ensemble du flux vidéo large champ résultant dans un format de même volumineux, puisque seule une faible partie du flux vidéo large champ de sortie reste de même en mémoire du dispositif de manière décodée. Ainsi, avec la solution avantageuse retenue, seules quelques images sont décodées et traitées à chaque instant, ce qui ne nécessite qu'un faible espace mémoire, ainsi qu'une puissance de calcul raisonnable. Les différents flux vidéo et le flux vidéo large champ dans leur ensemble sont mémorisés dans le format vidéo encodé standard, par exemple MPEG ou h265, qui occupe un espace mémoire standardisé, compressé, prévu pour optimiser l'espace mémoire d'un dispositif informatique. Cette approche est compatible avec l'utilisation d'un simple ordinateur personnel (PC) pour la mise en œuvre du procédé et la formation du dispositif de fusion 1.

En remarque, lors de l'encodage du flux vidéo large champ, une ou plusieurs bande(s) audio associée(s) à un ou plusieurs flux vidéo source(s) peu(ven)t aussi être encodées avec le flux vidéo large champ, pour former en fait un flux audio-vidéo large champ.

Enfin, le dispositif de fusion 1 de flux vidéo comprend une mémoire, non représentée, qui conserve le flux vidéo large champ généré, qui peut ensuite être transmis par une sortie 11 du dispositif de fusion, vers un éventuel lecteur extérieur par exemple. En variante, le dispositif de fusion 1 de flux vidéo comprend aussi un lecteur intégré qui permet de visualiser le flux vidéo large champ, sur un écran 12 du dispositif par exemple. Enfin, toutes les étapes mentionnées précédemment sont mises en œuvre à l'aide de moyens logiciels et d'au moins un calculateur 13.

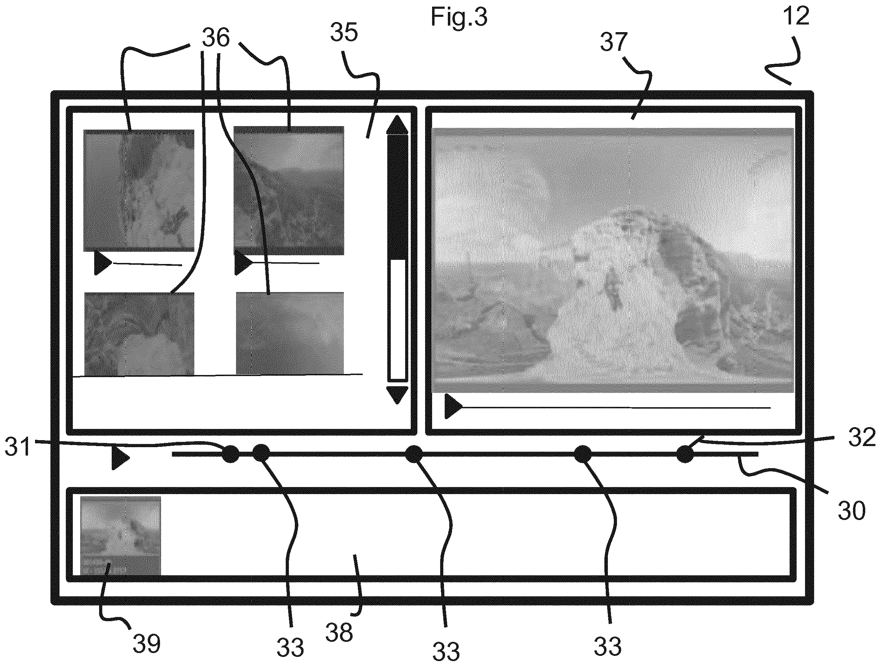

Un problème technique complémentaire se pose pour la mise en œuvre du procédé de fusion de flux vidéo décrit précédemment, et mis en œuvre par le dispositif de fusion 1. En effet, dans un mode de réalisation choisi, certaines des étapes du procédé proposent une intervention d'un opérateur, comme cela va être détaillé ci-après, et il est nécessaire de rendre cette intervention optimale et conviviale. Pour cela, la solution repose aussi sur une interface homme machine, à l'aide d'un moyen logiciel mis en œuvre par le calculateur 13 du dispositif de fusion et permettant des échanges avec un opérateur par l'intermédiaire de l'écran 12 du dispositif de fusion. La figure 3 expose ainsi un menu avec les principales fonctionnalités de l'interface homme machine selon un mode de réalisation, dont les étapes spécifiques au sein du procédé décrit précédemment vont maintenant être détaillées.

D'abord, l'interface homme machine propose une fenêtre 35 dans laquelle l'opérateur peut positionner les différents flux vidéo sources à fusionner, dans une étape initiale E0 du procédé. Plus précisément, au moins une image 36 issue de chaque flux vidéo est affichée dans cet espace, ainsi que le nom associé aux flux vidéo. Chaque flux vidéo peut être intégralement visualisé, de manière indépendante, au sein de cette fenêtre 35, qui offre donc la fonction de multi-lecteurs vidéo. L'opérateur a la possibilité d'ajouter ou retirer les flux vidéo de cette fenêtre 35. Pour cela, il peut soit faire appel à une recherche manuelle dans l'espace mémoire du dispositif de fusion pour sélectionner les flux vidéo à ajouter, soit les sélectionner sur une autre fenêtre et les déplacer dans la fenêtre 35 mentionné. Inversement, il peut les supprimer de l'espace, soit par une touche de suppression soit en les déplaçant manuellement hors de l'espace.

De plus, l'interface homme machine permet à un opérateur de choisir les limites temporelles de la fusion des flux vidéo sources, c'est-à-dire les instants de début et de fin de la fusion. Pour cela, l'interface homme machine présente à l'opérateur une droite de temps 30, sur laquelle il peut positionner deux curseurs 31, 32 fixant les instants de début et de fin de la vidéo large champ à générer, par exemple dans une autre étape préalable E05 du procédé. Naturellement, une autre interface peut lui permettre en variante de saisir ces instants.

Pour procéder au calcul des instants de référence et des paramètres de référence selon les étapes E3 et E4 du procédé décrit précédemment, l'opérateur peut ajouter des curseurs supplémentaires 33 sur la droite de temps 30 pour définir les instants de référence ti, à l'étape E3. Le procédé réalise alors une image panoramique entre les images 36 aux instants de référence choisis des différents flux vidéo. Les résultats obtenus sont des images panoramiques 39, qui sont affichées simultanément ou successivement dans une zone de visualisation 38 de l'interface homme machine.

Si ce résultat n'est pas satisfaisant ou si l'opérateur souhaite procéder à plusieurs fusions différentes, il peut déplacer au moins un curseur 33 sur la droite de temps 30 pour définir un autre jeu d'instants de référence et refaire une génération d'image panoramique. Il répète ces étapes autant de fois qu'il le souhaite. Il peut alors obtenir plusieurs images panoramiques 39 résultantes dans la zone de visualisation 38.

Cette manière de procéder permet à un opérateur d'itérer ce procédé jusqu'à atteindre un résultat satisfaisant, qu'il peut valider par une simple inspection visuelle dans la zone de visualisation 38. Il choisit alors le résultat de meilleure qualité, qui garantit un choix avantageux des paramètres de construction panoramique.

En complément, l'opérateur peut ouvrir un autre menu de l'interface homme machine, dans lequel il peut modifier les paramètres de construction de la fusion des images de chaque flux vidéo, pour affiner le résultat visualisé dans la zone de visualisation 38.

Le flux vidéo large champ résultant vient s'afficher dans une autre fenêtre d'aperçu 37 de vidéo large champ, qui permet sa simple visualisation comme une vidéo standard.

En résumé, le dispositif de fusion de flux vidéo décrit précédemment peut se présenter comme un simple ordinateur, ou tout autre dispositif comprenant au moins un calculateur, une mémoire et des moyens de communication vers des dispositifs externes pour la réception des flux vidéo sources en entrée et/ou la transmission du flux vidéo large champ résultant en sortie. Ce dispositif comprend avantageusement un écran pour la présentation d'une interface homme machine à un opérateur, comme décrit précédemment. En remarque, ce dispositif est indépendant du dispositif utilisé pour procéder à l'enregistrement des films, ne nécessite pas de connaissance spécifique ou de calibration de ce dispositif. Il repose uniquement sur les vidéos sélectionnées.

L'invention porte aussi sur un système qui comprend un support multi-caméras (Rig) sur lequel sont montées plusieurs caméras, au moins deux et avantageusement au moins six, et un dispositif de fusion tel que décrit ci-dessus. Ainsi, les différents flux vidéo proviennent avantageusement de caméras positionnées en un même endroit mais orientées différemment, pour obtenir un flux vidéo large champ obtenu à partir de l'observation de l'espace en un même point.

Le flux vidéo large champ généré par le procédé de fusion tel que décrit précédemment présente l'avantage d'offrir un flux vidéo comprenant une quantité d'information supérieure à celle d'une simple vidéo de l'état de la technique, obtenue par une seule caméra, et permet, à l'aide d'un lecteur adapté, d'offrir une visualisation plus riche d'une scène filmée que ce qu'on peut facilement obtenir avec les solutions existantes.

Notamment, le procédé décrit ci-dessus est particulièrement avantageux pour les applications suivantes, citées à titre d'exemples non limitatifs.

D'abord, le système mentionné ci-dessus est particulièrement adapté pour filmer un événement réunissant une foule nombreuse, comme un concert, un événement sportif dans un stade, une fête de famille comme un mariage, etc. Dans le cas d'un concert, un support multi-caméras tel que mentionné précédemment peut être positionné sur la scène, et permet de filmer le spectacle ainsi que le public simultanément, ce qui permet ensuite à la lecture d'obtenir facilement la possibilité de visualiser le spectacle et/ou le public à tout instant du film. De manière similaire, un ou plusieurs support(s) multi-caméras peu(ven)t être disposés au sein d'une enceinte d'un stade, pour permettre depuis un seul point de vue de filmer simultanément l'intégralité de l'enceinte, le terrain de sport comme le public. Ces systèmes permettent ainsi de s'affranchir des dispositifs complexes prévus aujourd'hui, reposant sur une multitude de caméras disposés en de nombreux points d'un stade, équipés de mécanismes comme des rails ou des moteurs pour les déplacer, en rotation et/ou translation, pour modifier la vue selon le déroulement de l'événement.

En complément, le système avec un support multi-caméras est aussi intéressant pour une application « embarquée », c'est-à-dire accompagnant une personne ou un dispositif qui se déplace. A titre d'exemple, ce support peut être fixé sur le casque d'un sportif pendant une épreuve, lors d'un vol en parapente, un saut en parachute, une escalade, une descente à ski, etc. Il peut être disposé sur un véhicule, comme un vélo, une moto, une voiture.

En variante, le support multi-caméras peut être associé à un drone ou un hélicoptère, pour obtenir une vidéo aérienne complète, permettant un enregistrement large champ d'un paysage, d'un site touristique, d'un site à surveiller, d'un événement sportif vu du ciel, etc. Une telle application peut ainsi aussi servir pour un système de télésurveillance.

## Revendications

1. Procédé de fusion de plusieurs flux vidéo, comprenant les étapes suivantes :
(E3) - définition de plusieurs instants de référence,
(E4) - Calcul de la valeur de référence de paramètres de construction d'un algorithme de construction d'une image panoramique permettant de réunir les images des flux vidéo respectivement pour chaque instant de référence à l'aide de l'algorithme de construction d'une image panoramique,
(E6) - fusion des flux vidéo par construction d'images panoramiques regroupant les images des différents flux vidéo à un même instant, cette construction d'images panoramiques utilisant, à chaque instant donné, des paramètres de construction d'une image panoramique dont la valeur est calculée à partir d'au moins une valeur de référence de ces paramètres de construction.

2. Procédé de fusion de plusieurs flux vidéo selon la revendication précédente, **caractérisé en ce qu'**il comprend les étapes suivantes :
- réception par un moyen de communication (3) dans une mémoire électronique d'un dispositif de fusion (1) de plusieurs flux vidéo sources provenant de plusieurs caméras (20), ces flux vidéo sources comprenant des zones de recoupement ;
- choix d'un algorithme de construction d'une image panoramique définissant et utilisant plusieurs paramètres de construction géométriques et radiométriques ;
- calcul (E4) par une première phase de l'algorithme de construction d'une image panoramique des valeurs de référence de ces paramètres de construction aux instants de référence ;
- calcul (E6) aux autres instants des valeurs de ces paramètres de construction à partir des valeurs de référence des paramètres de construction, sans mettre en œuvre la première phase de l'algorithme de construction d'une image panoramique ;
- fusion des flux vidéo sources par construction d'images panoramiques regroupant les images des différents flux vidéo sources datées du même instant, en mettant en œuvre une seconde phase de construction d'une image panoramique de l'algorithme de construction et en utilisant les valeurs des paramètres de construction telles que définies aux étapes précédentes.

3. Procédé de fusion de plusieurs flux vidéo selon la revendication 1 ou 2, **caractérisé en ce qu'**il comprend la fusion des flux vidéo par construction d'images panoramiques regroupant les images des différents flux vidéo, cette construction d'images panoramiques utilisant certains paramètres de construction d'une image panoramique constants sur tout ou partie de la durée de la fusion et au moins un paramètre de construction d'une image panoramique variable sur au moins une partie de la durée de la fusion, la valeur de cet au moins un paramètre de construction variable étant obtenue par une interpolation mathématique à partir d'au moins deux valeurs de référence dudit paramètre de construction calculées à deux instants de référence pour obtenir une évolution dans le temps continue de la valeur de cet au moins un paramètre de construction.

4. Procédé de fusion de plusieurs flux vidéo selon l'une des revendications précédentes, **caractérisé en ce qu'**il comprend la fusion des flux vidéo par construction d'images panoramiques regroupant les images des différents flux vidéo, cette construction d'images panoramiques utilisant les valeurs de référence pour les paramètres de construction à chaque instant de référence.

5. Procédé de fusion de plusieurs flux vidéo selon l'une des revendications précédentes, **caractérisé en ce qu'**il comprend au moins un intervalle de temps sur lequel il utilise des valeurs constantes de paramètres de construction, égales à une valeur de référence, pour la mise en œuvre d'une étape de fusion des flux vidéo par construction d'images panoramiques regroupant les images des différents flux vidéo.

6. Procédé de fusion de plusieurs flux vidéo selon l'une des revendications précédentes, **caractérisé en ce qu'**il comprend au moins un intervalle de temps sur lequel il utilise des paramètres de construction d'une image panoramique dont la valeur est calculée par une interpolation à partir d'un moins deux valeurs de référence des paramètres de construction pour des instants de référence distincts, notamment par une interpolation linéaire, Bézier, cubique, spline, et/ou b-spline.

7. Procédé de fusion de plusieurs flux vidéo selon l'une des revendications précédentes, **caractérisé en ce que** l'étape (E3) de calcul de paramètres de construction à un instant de référence comprend la modification des paramètres de construction à un instant de référence précédent, les paramètres de construction modifiés comprenant uniquement deux ou trois paramètres correspondant à au moins deux ou trois orientations d'un support multi-caméra pour garantir la stabilité de l'horizon sur la vidéo large champ résultante.

8. Procédé de fusion de plusieurs flux vidéo selon l'une des revendications précédentes, **caractérisé en ce qu'**il comprend les étapes suivantes :
(E3) - définition automatique ou par saisie dans une interface homme machine d'au moins un instant de référence,
(E4) - définition des paramètres de construction de référence pour réunir les images des flux vidéo à cet instant de référence,
Ou **en ce qu'**il comprend les étapes suivantes :
(E3) - définition automatique ou par saisie dans une interface homme machine d'un instant de référence,
(E4) - élaboration des paramètres de construction d'une image panoramique réunissant les images des flux vidéo pour différents instants répartis autour de l'instant de référence, puis définition des valeurs de référence des paramètres de construction à l'instant de référence par une combinaison, notamment une moyenne, des paramètres de construction d'une image panoramique obtenus sur les différents instants,
Ou **en ce qu'**il comprend les étapes suivantes :
(E3) - définition automatique ou par saisie dans une interface homme machine de différents instants autour d'un instant de référence, notamment selon une période prédéfinie sur tout ou partie d'une durée considérée pour la fusion des flux vidéo,
(E4) - élaboration des paramètres de construction d'une image panoramique réunissant les images des flux vidéo pour tous ces instants, puis définition des valeurs de référence des paramètres de construction à l'instant de référence par une combinaison, notamment une moyenne, des paramètres de construction d'une image panoramique obtenus sur ces différents instants autour de l'instant de référence.

9. Procédé de fusion de plusieurs flux vidéo selon l'une des revendications précédentes, **caractérisé en ce qu'**il comprend une étape de saisie d'au moins un instant de référence par une interface homme machine et une étape de présentation de l'image panoramique (39) réunissant les images des flux vidéo à cet instant de référence dans une zone de visualisation (38) de l'interface homme machine du dispositif.

10. Procédé de fusion de plusieurs flux vidéo selon l'une des revendications précédentes, **caractérisé en ce qu'**il comprend la répétition des étapes suivantes :
(E5) - décodage partiel de chaque flux vidéo autour d'un instant donné ;
(E6) - fusion dans une image panoramique de chaque image décodée de chaque flux vidéo à l'instant donné, en utilisant les valeurs, calculées à cet instant donné, des paramètres de construction associées à un algorithme de construction d'image panoramique choisi ;
(E7) - ajout de l'image panoramique à un flux vidéo large champ obtenu par les itérations précédentes de ces étapes répétées.

11. Procédé de fusion de plusieurs flux vidéo selon la revendication précédente, **caractérisé en ce qu'**il comprend une étape de codage vidéo du flux vidéo large champ en fin de chaque répétition des étapes (E5)-(E7) ou de la répétition d'un faible nombre de ces étapes.

12. Procédé de fusion de plusieurs flux vidéo selon l'une des revendications précédentes, **caractérisé en ce qu'**il comprend les étapes préalables suivantes :
(E1) - mesure du décalage temporel des différents flux vidéo ;
(E2) - synchronisation des différents flux vidéo en associant les images les plus proches dans le temps de ces différents flux vidéo.

13. Procédé de fusion de plusieurs flux vidéo selon la revendication précédente, **caractérisé en ce que** l'étape (E1) de mesure du décalage temporel comprend l'utilisation de la bande son associée aux différents flux vidéo pour identifier un son identique sur les différentes bandes son, puis **en ce qu'**elle comprend une étape de déduction du temps de décalage entre les différents flux vidéo, puis **en ce que** l'étape de synchronisation (E2) associe pour chaque instant les images des différents flux vidéo les plus proches en tenant compte de leur décalage temporel.

14. Procédé de fusion de plusieurs flux vidéo selon l'une des revendications précédentes, **caractérisé en ce que** l'étape de fusion des flux vidéo comprend l'association d'au moins une des bandes audio, associée à au moins un des flux vidéo, à un flux vidéo large champ résultant de la fusion.

15. Dispositif de fusion (1) de plusieurs flux vidéo comprenant au moins un calculateur (13) et une mémoire, configuré pour mettre en œuvre les étapes du procédé de fusion de plusieurs flux vidéo selon l'une des revendications précédentes.

16. Interface homme machine d'un dispositif de fusion (1) de plusieurs flux vidéo selon la revendication précédente, **caractérisé en ce qu'**elle comprend une interface de saisie d'au moins un instant de référence pour le calcul des paramètres de construction panoramique pour la fusion des images des flux vidéo.

17. Interface homme machine d'un dispositif de fusion de plusieurs flux vidéo selon la revendication précédente, **caractérisé en ce qu'**elle comprend tout ou partie des interfaces suivantes :
- une fenêtre (35) de présentation des flux vidéo à fusionner, avec une fonctionnalité d'ajout ou de suppression de flux vidéo ;
- une zone de saisie d'un instant de début et de fin de la fusion ;
- une fenêtre (38) de visualisation d'une image panoramique résultant de la fusion des images des différents flux vidéo à un instant de référence ti ;
- une fenêtre d'aperçu (37) d'un flux vidéo large champ représentant la fusion des flux vidéo.

18. Système de fusion de flux vidéo, **caractérisé en ce qu'**il comprend un dispositif de fusion (1) de flux vidéo selon la revendication 15 et un support multi-caméras comprenant au moins deux logements pour la fixation de caméras, notamment tels que deux caméras adjacentes soient orientées selon une orientation sensiblement perpendiculaire entre elles.

19. Système de fusion de flux vidéo selon la revendication précédente, **caractérisé en ce qu'**il comprend un lecteur d'un flux vidéo large champ résultant de la fusion de plusieurs flux vidéo.

20. Procédé de fusion de plusieurs flux vidéo selon l'une des revendications 1 à 14, **caractérisé en ce qu'**il comprend une étape préalable de positionnement d'au moins un support multi-caméras au niveau d'une scène de spectacle, au sein d'une enceinte sportive, sur un athlète pendant une épreuve sportive, sur un engin de transport, sur un drone ou un hélicoptère, une étape consistant à filmer plusieurs flux vidéo sources à partir de caméras positionnées sur ce au moins un support multi-caméras, une phase de fusion desdits plusieurs flux vidéo sources selon un procédé de fusion selon l'une des revendications 1 à 14, et une étape de visualisation sur au moins un espace d'affichage d'au moins un écran du flux vidéo large champ résultant.

## Patentansprüche

1. Verfahren zum Zusammenfügen von mehreren Videoströmen, welches die folgenden Schritte umfasst:
(E3) - Definition mehrerer Referenzzeitpunkte,
(E4) - Berechnung des Referenzwertes von Konstruktionsparametern eines Algorithmus zur Konstruktion eines Panoramabildes, die es ermöglichen, die Bilder der Videoströme jeweils für jeden Referenzzeitpunkt mithilfe des Algorithmus zur Konstruktion eines Panoramabildes zu vereinigen,
(E6) - Zusammenfügen der Videoströme durch Konstruktion von Panoramabildern, welche die Bilder der verschiedenen Videoströme zu ein und demselben Zeitpunkt zusammenführen, wobei diese Konstruktion von Panoramabildern zu jedem gegebenen Zeitpunkt Konstruktionsparameter eines Panoramabildes verwendet, deren Wert aus wenigstens einem Referenzwert dieser Konstruktionsparameter berechnet wird.

2. Verfahren zum Zusammenfügen von mehreren Videoströmen nach dem vorhergehenden Anspruch, **dadurch gekennzeichnet, dass** es die folgenden Schritte umfasst:
- Empfang, durch ein Kommunikationsmittel (3) in einem elektronischen Speicher einer Vorrichtung zum Zusammenfügen (1), von mehreren Quellenvideoströmen, die von mehreren Kameras (20) stammen, wobei diese Quellenvideoströme Überschneidungsbereiche umfassen;
- Wahl eines Algorithmus zur Konstruktion eines Panoramabildes, der mehrere geometrische und radiometrische Konstruktionsparameter definiert und verwendet;
- Berechnung (E4), durch eine erste Phase des Algorithmus zur Konstruktion eines Panoramabildes, der Referenzwerte dieser Konstruktionsparameter zu den Referenzzeitpunkten;
- Berechnung (E6), zu den anderen Zeitpunkten, der Werte dieser Konstruktionsparameter aus den Referenzwerten der Konstruktionsparameter, ohne die erste Phase des Algorithmus zur Konstruktion eines Panoramabildes durchzuführen;
- Zusammenfügen der Quellenvideoströme durch Konstruktion von Panoramabildern, welche die Bilder der auf denselben Zeitpunkt datierten verschiedenen Quellenvideoströme zusammenführen, indem eine zweite Phase der Konstruktion eines Panoramabildes des Konstruktionsalgorithmus durchgeführt wird, und unter Verwendung der Werte der Konstruktionsparameter, wie sie in den vorhergehenden Schritten definiert wurden.

3. Verfahren zum Zusammenfügen von mehreren Videoströmen nach Anspruch 1 oder 2, **dadurch gekennzeichnet, dass** es das Zusammenfügen der Videoströme durch Konstruktion von Panoramabildern umfasst, welche die Bilder der verschiedenen Videoströme zusammenführen, wobei diese Konstruktion von Panoramabildern gewisse Konstruktionsparameter eines Panoramabildes, die während der gesamten Dauer des Zusammenfügens oder während eines Teils davon konstant sind, und wenigstens einen Konstruktionsparameter eines Panoramabildes, der während wenigstens eines Teils der Dauer des Zusammenfügens variabel ist, verwendet, wobei der Wert dieses wenigstens einen variablen Konstruktionsparameters durch eine mathematische Interpolation aus wenigstens zwei Referenzwerten des Konstruktionsparameters erhalten wird, die zu zwei Referenzzeitpunkte berechnet wurden, um eine kontinuierliche zeitliche Änderung des Wertes dieses wenigstens einen Konstruktionsparameters zu erhalten.

4. Verfahren zum Zusammenfügen von mehreren Videoströmen nach einem der vorhergehenden Ansprüche, **dadurch gekennzeichnet, dass** es das Zusammenfügen der Videoströme durch Konstruktion von Panoramabildern umfasst, welche die Bilder der verschiedenen Videoströme zusammenführen, wobei diese Konstruktion von Panoramabildern die Referenzwerte für die Konstruktionsparameter zu jedem Referenzzeitpunkt verwendet.

5. Verfahren zum Zusammenfügen von mehreren Videoströmen nach einem der vorhergehenden Ansprüche, **dadurch gekennzeichnet, dass** es wenigstens ein Zeitintervall umfasst, in welchem es konstante Werte von Konstruktionsparametern, die gleich einem Referenzwert sind, zur Durchführung eines Schrittes des Zusammenfügens der Videoströme durch Konstruktion von Panoramabildern, welche die Bilder der verschiedenen Videoströme zusammenführen, verwendet.

6. Verfahren zum Zusammenfügen von mehreren Videoströmen nach einem der vorhergehenden Ansprüche, **dadurch gekennzeichnet, dass** es wenigstens ein Zeitintervall umfasst, in welchem es Konstruktionsparameter eines Panoramabildes verwendet, deren Wert durch eine Interpolation aus wenigstens zwei Referenzwerten der Konstruktionsparameter für verschiedene Referenzzeitpunkte berechnet wird, insbesondere durch eine lineare, Bezier-, kubische, Spline- und/oder B-Spline-Interpolation.

7. Verfahren zum Zusammenfügen von mehreren Videoströmen nach einem der vorhergehenden Ansprüche, **dadurch gekennzeichnet, dass** der Schritt (E3) der Berechnung von Konstruktionsparametern zu einem Referenzzeitpunkt die Modifikation der Konstruktionsparametern zu einem vorhergehenden Referenzzeitpunkt umfasst, wobei die modifizierten Konstruktionsparameter ausschließlich zwei oder drei Parameter umfassen, die wenigstens zwei oder drei Ausrichtungen einer Mehrkamera-Halterung entsprechen, um die Stabilität des Horizonts auf dem resultierenden Weitwinkelvideo zu garantieren.

8. Verfahren zum Zusammenfügen von mehreren Videoströmen nach einem der vorhergehenden Ansprüche, **dadurch gekennzeichnet, dass** es die folgenden Schritte umfasst:
(E3) - automatische oder durch Eingabe in eine Mensch-Maschine-Schnittstelle erfolgende Definition wenigstens eines Referenzzeitpunktes,
(E4) - Definition der Referenz-Konstruktionsparameter, um die Bilder der Videoströme zu diesem Referenzzeitpunkt zu vereinigen,
oder dadurch, dass es die folgenden Schritte umfasst:
(E3) - automatische oder durch Eingabe in eine Mensch-Maschine-Schnittstelle erfolgende Definition eines Referenzzeitpunktes,
(E4) - Erstellung der Konstruktionsparameter eines Panoramabildes, das die Bilder der Videoströme für verschiedene. um den Referenzzeitpunkt herum verteilte Zeitpunkte vereinigt, anschließend Definition der Referenzwerte der Konstruktionsparameter zum Referenzzeitpunkt durch eine Kombination, insbesondere einen Mittelwert, der Konstruktionsparameter eines Panoramabildes, die zu den verschiedenen Zeitpunkten erhalten wurden,
oder dadurch, dass es die folgenden Schritte umfasst:
(E3) - automatische oder durch Eingabe in eine Mensch-Maschine-Schnittstelle erfolgende Definition verschiedener Zeitpunkte um einen Referenzzeitpunkt herum, insbesondere gemäß einer vordefinierten Periode auf einer gesamten Dauer oder einem Teil einer Dauer, die für das Zusammenfügen der Videoströme betrachtet wird,
(E4) - Erstellung der Konstruktionsparameter eines Panoramabildes, das die Bilder der Videoströme für alle diese Zeitpunkte vereinigt, anschließend Definition der Referenzwerte der Konstruktionsparameter zum Referenzzeitpunkt durch eine Kombination, insbesondere einen Mittelwert, der Konstruktionsparameter eines Panoramabildes, die zu diesen verschiedenen Zeitpunkten um den Referenzzeitpunkt herum erhalten wurden.

9. Verfahren zum Zusammenfügen von mehreren Videoströmen nach einem der vorhergehenden Ansprüche, **dadurch gekennzeichnet, dass** es einen Schritt der Eingabe wenigstens eines Referenzzeitpunktes über eine Mensch-Maschine-Schnittstelle und einen Schritt der Präsentation des Panoramabildes (39), das die Bilder der Videoströme zu diesem Referenzzeitpunkt vereinigt, in einem Visualisierungsbereich (38) der Mensch-Maschine-Schnittstelle der Vorrichtung umfasst.

10. Verfahren zum Zusammenfügen von mehreren Videoströmen nach einem der vorhergehenden Ansprüche, **dadurch gekennzeichnet, dass** es die Wiederholung der folgenden Schritte umfasst:
(E5) - teilweise Decodierung jedes Videostroms um einen gegebenen Zeitpunkt herum;
(E6) - Zusammenfügen, in einem Panoramabild, jedes decodierten Bildes jedes Videostroms zu dem gegebenen Zeitpunkt unter Verwendung der für diesen gegebenen Zeitpunkt berechneten Werte der Konstruktionsparameter, die einem gewählten Algorithmus zur Konstruktion eines Panoramabildes zugeordnet sind;
(E7) - Hinzufügen des Panoramabildes zu einem Weitwinkel-Videostrom, der durch die vorhergehenden Iterationen dieser wiederholten Schritte erhalten wurde.

11. Verfahren zum Zusammenfügen von mehreren Videoströmen nach dem vorhergehenden Anspruch, **dadurch gekennzeichnet, dass** es einen Schritt der Videocodierung des Weitwinkel-Videostroms am Ende jeder Wiederholung der Schritte (E5)-(E7) oder der Wiederholung einer geringen Anzahl dieser Schritte umfasst.

12. Verfahren zum Zusammenfügen von mehreren Videoströmen nach einem der vorhergehenden Ansprüche, **dadurch gekennzeichnet, dass** es die folgenden vorausgehenden Schritte umfasst:
(E1) - Messung des zeitlichen Versatzes der verschiedenen Videoströme;
(E2) - Synchronisation der verschiedenen Videoströme durch Verknüpfen der Bilder dieser verschiedenen Videoströme, die sich zeitlich am nächsten sind.

13. Verfahren zum Zusammenfügen von mehreren Videoströmen nach dem vorhergehenden Anspruch, **dadurch gekennzeichnet, dass** der Schritt (E1) der Messung des zeitlichen Versatzes die Verwendung der den verschiedenen Videoströmen zugeordneten Tonspur umfasst, um einen identischen Ton auf den verschiedenen Tonspuren zu identifizieren, weiterhin dadurch, dass es einen Schritt der Ableitung der Versatzzeit zwischen den verschiedenen Videoströmen umfasst, weiterhin dadurch, dass der Schritt der Synchronisation (E2) für jeden Zeitpunkt die Bilder der verschiedenen Videoströme verknüpft, die sich unter Berücksichtigung ihres zeitlichen Versatzes am nächsten sind.

14. Verfahren zum Zusammenfügen von mehreren Videoströmen nach einem der vorhergehenden Ansprüche, **dadurch gekennzeichnet, dass** der Schritt des Zusammenfügens der Videoströme die Zuordnung wenigstens einer der Audiospuren, die wenigstens einem der Videoströme zugeordnet ist, zu einem aus dem Zusammenfügen resultierenden Weitwinkel-Videostrom umfasst.

15. Vorrichtung zum Zusammenfügen (1) von mehreren Videoströmen, die wenigstens einen Rechner (13) und einen Speicher umfasst und dafür ausgelegt ist, die Schritte des Verfahrens zum Zusammenfügen von mehreren Videoströmen nach einem der vorhergehenden Ansprüche auszuführen.

16. Mensch-Maschine-Schnittstelle einer Vorrichtung zum Zusammenfügen (1) von mehreren Videoströmen nach dem vorhergehenden Anspruch, **dadurch gekennzeichnet, dass** sie eine Schnittstelle zur Eingabe wenigstens eines Referenzzeitpunktes für die Berechnung der Panorama-Konstruktionsparameter für das Zusammenfügen der Bilder der Videoströme umfasst.

17. Mensch-Maschine-Schnittstelle einer Vorrichtung zum Zusammenfügen von mehreren Videoströmen nach dem vorhergehenden Anspruch, **dadurch gekennzeichnet, dass** sie alle oder einige der folgenden Schnittstellen umfasst:
- ein Fenster (35) zur Präsentation der zusammenzufügenden Videoströme, mit einer Funktionalität der Hinzufügung oder Entfernung eines Videostroms;
- einen Bereich zur Eingabe eines Anfangs- und Endzeitpunktes des Zusammenfügens;
- ein Fenster (38) zur Visualisierung eines Panoramabildes, das aus dem Zusammenfügen der Bilder der verschiedenen Videoströme zu einem Referenzzeitpunkt ti resultiert;
- ein Vorschaufenster (37) für einen Weitwinkel-Videostrom, der die Zusammenfügung der Videoströme darstellt.

18. System zum Zusammenfügen von Videoströmen, **dadurch gekennzeichnet, dass** es eine Vorrichtung zum Zusammenfügen (1) von Videoströmen nach Anspruch 15 und eine Mehrkamera-Halterung umfasst, die wenigstens zwei Aufnahmen für die Befestigung von Kameras umfasst, die insbesondere so beschaffen sind, dass zwei benachbarte Kameras in zueinander im Wesentlichen senkrechten Richtungen ausgerichtet sind.

19. System zum Zusammenfügen von Videoströmen nach dem vorhergehenden Anspruch, **dadurch gekennzeichnet, dass** es ein Lesegerät für einen Weitwinkel-Videostrom umfasst, der aus dem Zusammenfügen von mehreren Videoströmen resultiert.

20. Verfahren zum Zusammenfügen von mehreren Videoströmen nach einem der Ansprüche 1 bis 14, **dadurch gekennzeichnet, dass** es einen vorausgehenden Schritt der Positionierung wenigstens einer Mehrkamera-Halterung an einer Showbühne, in einer Sportanlage, an einem Athleten während einer Sportveranstaltung, an einem Transportmittel, an einer Drohne oder einem Helikopter, einen Schritt, der im Filmen mehrerer Quellenvideoströme mit Kameras, die auf dieser wenigstens einen Mehrkamera-Halterung positioniert sind, besteht, eine Phase des Zusammenfügens der mehreren Quellenvideoströme gemäß einem Verfahren zum Zusammenfügen nach einem der Ansprüche 1 bis 14 und einen Schritt der Visualisierung des resultierenden Weitwinkel-Videostroms auf wenigstens einem Anzeigebereich wenigstens eines Bildschirms umfasst.

## Claims

1. A method for stitching a plurality of video streams, comprising the following steps:
(E3) - defining a plurality of reference instants,
(E4) - calculating the reference value of parameters for construction of a panoramic image construction algorithm making it possible to combine the images of the video streams respectively for each reference instant with the aid of the panoramic image construction algorithm,
(E6) - stitching the video streams by constructing panoramic images containing the images of the various video streams at one and the same instant, this construction of panoramic images using, at each given instant, parameters for construction of a panoramic image whose value is calculated on the basis of at least one reference value of these construction parameters.

2. The method for stitching a plurality of video streams as claimed in the preceding claim, **characterized in that** it comprises the following steps:
- reception by a communication means (3) in an electronic memory of a stitching device (1) of a plurality of source video streams originating from a plurality of cameras (20), these source video streams comprising intercut zones;
- choosing of a panoramic image construction algorithm defining and using a plurality of geometric and radiometric construction parameters;
- calculation (E4) by a first phase of the panoramic image construction algorithm of the reference values of these construction parameters at the reference instants;
- calculation (E6) at the other instants of the values of these construction parameters on the basis of the reference values of the construction parameters, without implementing the first phase of the panoramic image construction algorithm;
- stitching of the source video streams by constructing panoramic images containing the images of the various source video streams dated the same instant, by implementing a second phase of construction of a panoramic image of the construction algorithm and by using the construction parameter values as defined in the preceding steps.

3. The method for stitching a plurality of video streams as claimed in claim 1 or 2, **characterized in that** it comprises the stitching of the video streams by constructing panoramic images containing the images of the various video streams, this construction of panoramic images using certain parameters for construction of a panoramic image which are constant over all or some of the duration of the stitching and at least one parameter for construction of a panoramic image which is variable over at least one part of the duration of the stitching, the value of this at least one variable construction parameter being obtained by a mathematical interpolation on the basis of at least two reference values of said construction parameter calculated at two reference instants to obtain a continuous evolution over time of the value of this at least one construction parameter.

4. The method for stitching a plurality of video streams as claimed in one of the preceding claims, **characterized in that** it comprises the stitching of the video streams by constructing panoramic images containing the images of the various video streams, this construction of panoramic images using the reference values for the construction parameters at each reference instant.

5. The method for stitching a plurality of video streams as claimed in one of the preceding claims, **characterized in that** it comprises at least one time interval over which it uses constant values of construction parameters, equal to a reference value, for the implementation of a step of stitching the video streams by constructing panoramic images containing the images of the various video streams.

6. The method for stitching a plurality of video streams as claimed in one of the preceding claims, **characterized in that** it comprises at least one time interval over which it uses parameters for construction of a panoramic image whose value is calculated by an interpolation on the basis of at least two reference values of the construction parameters for separate reference instants, especially by a linear, Bezier, cubic, spline, and/or b-spline interpolation.

7. The method for stitching a plurality of video streams as claimed in one of the preceding claims, **characterized in that** the step (E3) of calculating construction parameters at a reference instant comprises the modification of the construction parameters at a previous reference instant, the modified construction parameters comprising only two or three parameters corresponding to at least two or three orientations of a multi-camera holder to guarantee the stability of the horizon in the resulting wide field video.

8. The method for stitching a plurality of video streams as claimed in one of the preceding claims, **characterized in that** it comprises the following steps:
(E3) - defining automatically or by input into a human-machine interface at least one reference instant,
(E4) - defining the reference construction parameters so as to combine the images of the video streams at this reference instant,
Or **in that** it comprises the following steps:
(E3) - defining automatically or by input into a human-machine interface a reference instant,
(E4) - producing the parameters for construction of a panoramic image combining the images of the video streams for various instants distributed around the reference instant, and then defining the reference values of the construction parameters at the reference instant by combining, especially averaging, the parameters for construction of a panoramic image obtained at the various instants,
Or **in that** it comprises the following steps:
(E3) - defining automatically or by input into a human-machine interface various instants around a reference instant, especially according to a predefined period over all or some of a duration considered for the stitching of the video streams,
(E4) - producing the parameters for construction of a panoramic image combining the images of the video streams for all these instants, and then defining the reference values of the construction parameters at the reference instant by combining, especially averaging, the parameters for construction of a panoramic image obtained at these various instants about the reference instant.

9. The method for stitching a plurality of video streams as claimed in one of the preceding claims, **characterized in that** it comprises a step of inputting at least one reference instant via a human-machine interface and a step of presenting the panoramic image (39) combining the images of the video streams at this reference instant in a display zone (38) of the human-machine interface of the device.

10. The method for stitching a plurality of video streams as claimed in one of the preceding claims, **characterized in that** it comprises repeating the following steps:
(E5) - partially decoding each video stream about a given instant;
(E6) - stitching into a panoramic image each decoded image of each video stream at the given instant, by using the construction parameter values, calculated at this given instant, associated with a chosen panoramic image construction algorithm;
(E7) - adding the panoramic image to a wide field video stream obtained by the preceding iterations of these repeated steps.

11. The method for stitching a plurality of video streams as claimed in the preceding claim, **characterized in that** it comprises a step of video coding the wide field video stream at the end of each repetition of steps (E5)-(E7) or of the repetition of a small number of these steps.

12. The method for stitching a plurality of video streams as claimed in one of the preceding claims, **characterized in that** it comprises the following prior steps:
(E1) - measuring the temporal offset of the various video streams;
(E2) - synchronizing the various video streams by associating the images that are closest in time of these various video streams.

13. The method for stitching a plurality of video streams as claimed in the preceding claim, **characterized in that** the step (E1) of measuring the temporal offset comprises using the soundtrack associated with the various video streams to identify an identical sound in the various soundtracks, and then **in that** it comprises a step of deducting the offset time between the various video streams, and then **in that** the synchronizing step (E2) associates for each instant the closest images of the various video streams while taking account of their temporal offset.

14. The method for stitching a plurality of video streams as claimed in one of the preceding claims, **characterized in that** the step of stitching the video streams comprises associating at least one of the audio tracks, which is associated with at least one of the video streams, with a wide field video stream resulting from the stitching.

15. A device (1) for stitching a plurality of video streams comprising at least one processor (13) and a memory, configured to implement the steps of the method for stitching a plurality of video streams as claimed in one of the preceding claims.

16. A human-machine interface of a device (1) for stitching a plurality of video streams as claimed in the preceding claim, **characterized in that** it comprises an interface for inputting at least one reference instant for the calculation of the panoramic construction parameters for the stitching of the images of the video streams.

17. A human-machine interface of a device for stitching a plurality of video streams as claimed in the preceding claim, **characterized in that** it comprises all or some of the following interfaces:
- a window (35) for presenting the video streams to be stitched, having a functionality enabling video streams to be added or removed;
- a zone for inputting stitching start and end instants;
- a window (38) for viewing a panoramic image resulting from the stitching of the images of the various video streams at a reference instant ti;
- a window (37) for visualizing a wide field video stream representing the stitching of the video streams.

18. A system for stitching video streams, **characterized in that** it comprises a device (1) for stitching video streams as claimed in claim 15 and a multi-camera holder comprising at least two housings for fastening cameras, especially such that two adjacent cameras are oriented substantially perpendicular to each other.

19. The system for stitching video streams as claimed in the preceding claim, **characterized in that** it comprises a reader of a wide field video stream resulting from the stitching of a plurality of video streams.

20. The method for stitching a plurality of video streams as claimed in one of claims 1 to 14, **characterized in that** it comprises a prior step of positioning at least one multi-camera holder level with an event stage, in a sporting arena, on an athlete during a sporting event, on a vehicle, or on a drone or a helicopter, a step consisting in filming a plurality of source video streams from cameras positioned on this at least one multi-camera holder, a phase of stitching said plurality of source video streams using a stitching method as claimed in one of claims 1 to 14, and a step of viewing, on at least one display space of at least one screen, the resulting wide field video stream.
